# EUROPÄISCHE PATENTANMELDUNG

(11) **EP 1 004 422 A1**
(43) Veröffentlichungstag der Anmeldung: **31.05.2000**
(21) Anmeldenummer: 99122813.1
(22) Anmeldetag: 17.11.1999
(51) Int. Cl.: B29C 45/73

(54) **Vorrichtung zum Spritzgiessen von Kunststoffformteilen und Verfahren zum Herstellen einer solchen Vorrichtung**

(30) Priorität: 24.11.1998 DE 19854057
(71) Anmelder: Innova Engineering GmbH, 58706 Menden (DE)
(72) Erfinder: Westhoff, Reiner, 58708 Menden (DE)
(74) Vertreter: Thielmann, Andreas

(57) **Zusammenfassung**

Dargestellt und beschrieben ist eine Vorrichtung zum Spritzgießen von Kunststofformteilen mit einem Formkern (1) und einem Formgesenk, wobei der Hohlraum zwischen Formkern (1) und Formgesenk die Formteilkavität bildet und im Formkern (1) und/oder im Formgesenk der Kontur der Formteilkavität angepaßte Temperiermittelkanäle (4A, 4B, 4C) vorgesehen sind. Das Spritzgießen großflächiger Kunststofformteile mit optimaler Temperierung wird dadurch ermöglicht, daß der Formkern (1) und/oder das Formgesenk kavitätsseitig jeweils wenigstens ein Segment (3A, 3B, 3C, ...) aufweist, welches jeweils mit konturangepaßten Temperiermittelkanälen (4A, 4B, 4C) versehen und kraftschlüssig mit dem Formkern (1) bzw. dem Formgesenk verbunden ist.

## Beschreibung

Die Erfindung betrifft eine Vorrichtung zum Spritzgießen von Kunststofformteilen, mit einem Formkern und einem Formgesenk, wobei der Hohlraum zwischen Formkern und Formgesenk die Formteilkavität bildet und im Formkern und/oder im Formgesenk der Kontur der Formteilkavität angepaßte Temperiermittelkanäle vorgesehen sind sowie ein Verfahren zum Herstellen einer solchen Vorrichtung

Aus der EP 0 665 780 B1 sind eine Vorrichtung zur Herstellung von Kunststofformteilen und ein entsprechendes Verfahren zum Herstellen einer solchen Vorrichtung bekannt, wobei eine Optimierung der Werkzeugtemperierung dadurch erreicht wird, daß die vorhandenen Temperiermittelkanäle optimal dem Verlauf der Formteilkontur angepaßt sind.

Nach dieser bekannten Vorrichtung wird die Anpassung des Temperiermittelkanalverlaufs an die Formteilkontur durch konstruktives Trennen der Formeinsätze in der/den Temperierkanalebene/n erreicht. In die Trennebenen des Werkzeugeinsatzes kann nun mit Hilfe von Bearbeitungswerkzeugen ein Temperiermittelkanal mit beliebigem Verlauf und beliebigem Querschnitt eingebracht werden, um jede Formteilgeometrie optimal temperieren zu können. Die einzelne Temperiermittelkanäle aufweisenden Werkzeugstahlplatten werden anschließend durch geeignete Fügeverfahren ganzflächig miteinander verbunden, wodurch ein dreidimensionaler, der Formteilkontur angepaßter Temperiermittelkanalverlauf entsteht. Kürzere Zykluszeiten beim Spritzgießen und bessere Formteilqualität aufgrund der gleichmäßigen Abkühlung sind die Folge.

Zum Fügen der einzelnen mit Temperiermittelkanälen versehenen Werkzeugstahlplatten bedient man sich des Hart- bzw. Hochtemperaturlötens oder des Diffusionsschweißens. Diese eingesetzten Fügetechniken weisen jedoch physikalische Grenzen auf, wenn es darum geht, sehr große Formeinsätze nach dem beschriebenen Verfahren mit Temperiermittelkanälen auszustatten. Beispielsweise bei Spritzgießwerkzeugen für Innenverkleidungsteile von Kraftfahrzeugen oder für Transportbehälter aus Kunststoff kommt es zu Formteilabmessungen von 1 m und mehr, so daß der Kern oder das Gesenk eines solchen Werkzeuges entsprechend groß dimensioniert sein muß und oft eine Stärke von jeweils 40 cm und mehr aufweisen kann. Solche Formkerne oder Formgesenke können dabei Gewichte von mehreren Tonnen aufweisen. Solch große Formkerne oder -gesenke konstruktiv in Lagen zu teilen, die Temperiermittelkanäle einzubringen und anschließend die Einzelteile wieder ganzflächig zu fügen, ist mit den zuvor genannten Fügetechniken verfahrenstechnisch unmöglich.

Der Erfindung liegt daher die Aufgabe zugrunde, die eingangs genannte Vorrichtung zum Spritzgießen von Kunststofformteilen und das entsprechende Verfahren zum Herstellen einer solchen Vorrichtung so auszugestalten und weiterzubilden, daß auch das Spritzgießen großflächiger Kunststofformteile mit optimaler Temperierung ermöglicht wird.

Vorrichtungstechnisch wird die Aufgabe dadurch gelöst, daß der Formkern und/oder das Formgesenk kavitätsseitig jeweils wenigstens ein Segment aufweist, welches jeweils mit konturangepaßten Temperiermittelkanälen versehen und kraftschlüssig mit dem Formkern bzw. dem Formgesenk verbunden sind.

Verfahrenstechnisch erfolgt die Lösung der Aufgabe durch die folgenden Schritte:
- Auftrennen des Formkerns und/oder des Formgesenks in einen Rumpf und wenigstens ein Segment,
- Auftrennen jedes Segments in einzelne Segmentplatten,
- Herstellen von konturangepaßten Temperiermittelkanälen entsprechend dem gewünschten Verlauf in den jeweiligen Segmentplatten jedes Segments durch Fräsen, Erodieren od. dgl.,
- stoffschlüssiges Verbinden der einzelnen Segmentplatten zu den Segmenten und
- kraftschlüssiges Verbinden der Segmente mit dem Formkern bzw. Formgesenk.

Aufgrund der Erfindung wird es dem Anwender ermöglicht, große Formeinsätze trotz der oben genannten verfahrenstechnischen Grenzen der Fügetechniken konturangeglichen, d.h. dreidimensional zu temperieren.

Die einzelnen Segmente stellen mehrere kleine Einheiten dar, die mit den bevorzugten Fügetechniken problemlos herstellbar sind. Die Segmente können dann formschlüssig mit dem Kernkopf bzw. Kerngesenk, beispielsweise durch Verschraubung od. dgl., es ist jedoch für den Formkern auch denkbar, die Kraftübertragung durch einen konstruktiven Formschluß, beispielsweise durch korrespondierende Stege und Ausnehmungen bzw. durch Nut/Feder-Verbindungen sicherzustellen, verbunden werden. Damit läßt sich das optimale Temperieren von Spritzgießwerkzeugen auch auf den Großspritzgießformenbau übertragen. Ferner ist es möglich, durch Aufteilen des Kernkopfes bzw. Gesenkkopfes in einzelne Segmente sich innerhalb der einzelnen Segmente wesentlich besser der jeweiligen Formteilgeometrie anzupassen.

Um auch bei komplizierteren Formteilgeometrien einen optimalen Temperiermittelkanalverlauf zu erreichen, ist nach einer weiteren Lehre der Erfindung vorgesehen, daß der Formkern einen Kernrumpf und einen aus wenigstens einem Segment bestehenden Kernkopf aufweist und daß jedes Segment aus mehreren Temperiermittelkanäle enthaltenden und untereinander stoffschlüssig verbundenen Kernsegmentplatten hergestellt ist. Entsprechend weist das Formgesenk einen Gesenkrumpf und einen aus wenigstens einem Segment bestehenden Gesenkkopf auf und ist jedes Segment aus mehreren Temperiermittelkanäle enthaltenden und untereinander stoffschlüssig verbundenen Gesenksegmentplatten hergestellt.

Eine weitere Lehre der Erfindung sieht vor, daß die einzelnen benachbarten Segmente untereinander durch Befestigungselemente formschlüssig miteinander verbunden sind. Bevorzugt sind diese Befestigungselemente als Bolzen, Stifte oder Schrauben ausgebildet. Durch diese Ausbildung wird erreicht, daß die aus einzelnen Segmenten und Kernrumpf bzw. Gesenkrumpf bestehenden Werkzeugteile zuverlässig untereinander fixiert sind, um einerseits gegeneinander abgedichtet zu sein und andererseits eine optimale Kraftübertragung beim Spritzgießvorgang zu gewährleisten.

Da die unterschiedlichen Segmente mit jeweils eigenen Temperaturkanälen versehen sind, ist es möglich, auch bei komplizierteren Geometrien stets einen optimalen Temperiermittelkanalverlauf zu erreichen.

Schließlich ist nach einer weiteren Lehre der Erfindung vorgesehen, daß einzelne Segmente wiederum in Untersegmente aufgeteilt sind. Durch eine solche Aufteilung kann auch kompliziertesten geometrischen Verhältnissen des herzustellenden Formteils Rechnung getragen werden.

Die Erfindung wird nachfolgend anhand einer lediglich ein Ausführungsbeispiel darstellenden Zeichnung erläutert. In der Zeichnung zeigen:
- Fig. 1: einen Formkern in Draufsicht,
- Fig. 2: den Formkern im Längsschnitt entlang der Linie II-II aus Fig. 1,
- Fig. 3: ein Formgesenk in einer Ansicht von unten und
- Fig. 4: das Formgesenk im Längsschnitt entlang der Linie IV-IV aus Fig. 3.

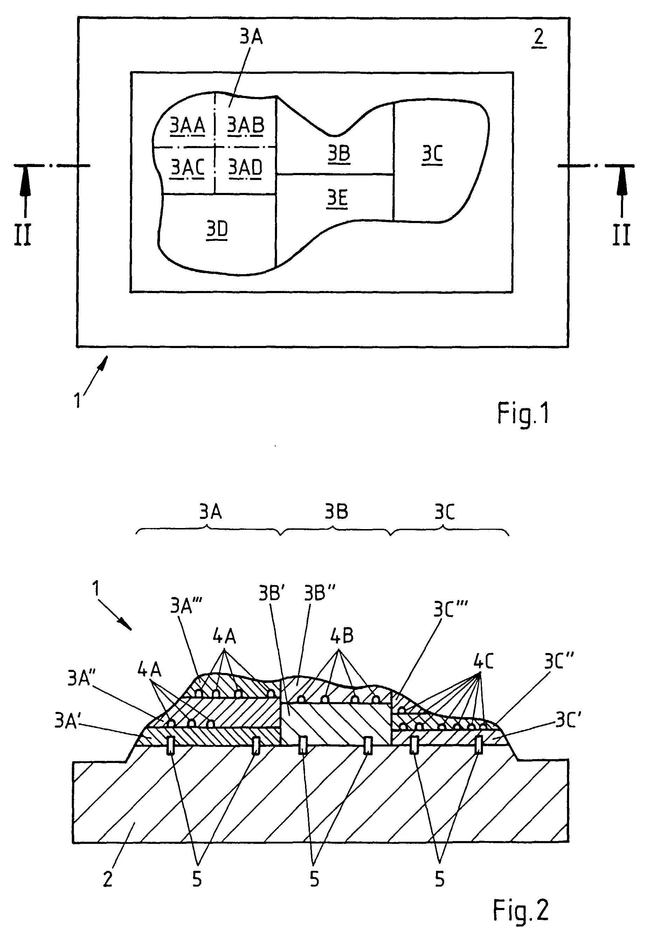

Fig. 1 zeigt einen Formkern 1, im wesentlichen bestehend aus einem Kernrumpf 2 und einem Kernkopf 3, wobei der Kernkopf 3 in unterschiedliche Segmente 3A, 3B, 3C, 3D, 3E aufgeteilt ist. Aus Fig. 2 geht deutlich hervor, daß die unterschiedlichen Segmente 3A, 3B, 3C, wiederum in einzelne Segmentplatten 3A', 3A'', 3A'''; 3B', 3B''; 3C', 3C'', 3C''' aufgeteilt sind.

Die einzelnen Segmente 3A, 3B, 3C, ... weisen dabei der Formteilkontur optimal angepaßte Temperiermittelkanäle 4A, 4B, 4C auf und sind im dargestellten und insoweit bevorzugten Ausführungsbeispiel mittels als Bolzen ausgebildete Befestigungselemente 5 mit dem Kernrumpf 2 verbunden.

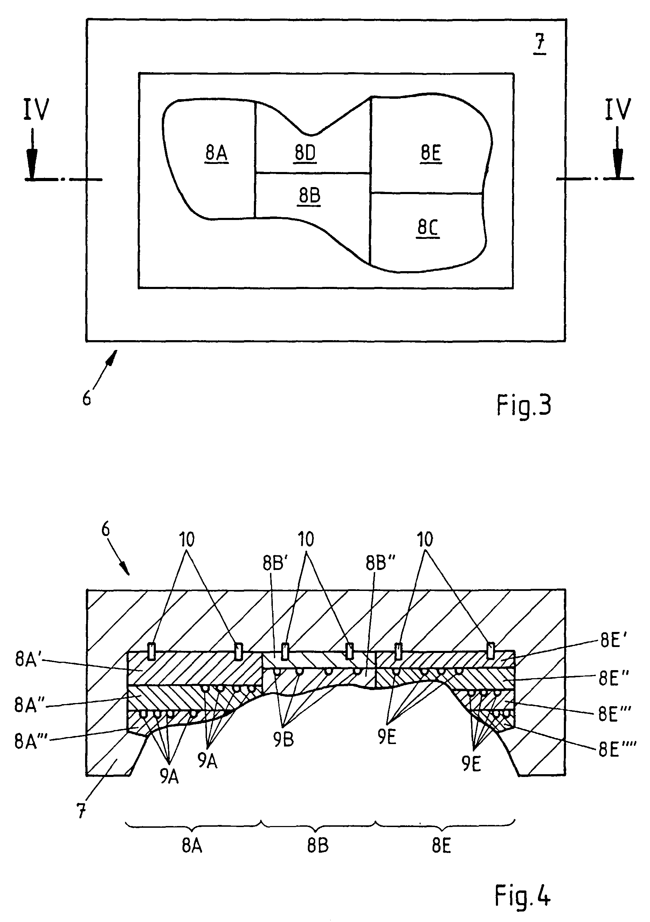

Entsprechend weist auch das Formgesenk 6 in Fig. 3 und 4 einen einstückigen Gesenkrumpf 7 und einen aus unterschiedlichen Segmenten 8A, 8B, 8D, 8E bestehenden Gesenkkopf 8 auf. Der in Fig. 4 dargestellte Aufbau der Segmente 8A, 8B, 8E aus Gesenksegmentplatten 8A', 8A'', 8A'''; 8B', 8B''; 8E', 8E'', 8E''', 8E'''' und Temperiermittelkanälen 9A, 9B, 9E entspricht dabei dem des Formkerns 3.

In Fig. 4 ist weiterhin erkennbar, daß die einzelnen Segmente 8A, 8B, 8E mittels Bolzen 10 mit dem Gesenkrumpf 7 kraftschlüssig verbunden sind.

Aus den Querschnitten der Fig. 2 und 4 ist deutlich ersichtlich, daß die vorhandenen Temperiermittelkanäle 4A, 4B, 4C und 9A, 9B, 9E optimal der Formteilkontur angepaßt sind. Es ist schnell ersichtlich, daß sich damit auch größere Formteile, wie beispielsweise Teile der Kraftfahrzeuginnenverkleidung oder Transportbehälter, beim Herstellvorgang optimal temperieren lassen.

Schließlich ist Fig. 1 noch zu entnehmen, daß einzelne Segmente, wie beim Segment 3A strichpunktiert dargestellt, wiederum in Untersegmente 3AA, 3AB, 3AC, 3AD aufgeteilt sein können, um auch kompliziertere Formteilgeometrien mit konturangeglichenen Temperiermittelkanälen versehen zu können.

## Patentansprüche

1. Vorrichtung zum Spritzgießen von Kunststofformteilen mit einem Formkern und einem Formgesenk, wobei der Hohlraum zwischen Formkern und Formgesenk die Formteilkavität bildet und im Formkern und/oder im Formgesenk der Kontur der Formteilkavität angepaßte Temperiermittelkanäle vorgesehen sind,
**dadurch gekennzeichnet,** daß der Formkern (1) und/oder das Formgesenk (6) kavitätsseitig jeweils wenigstens ein Segment (3A, 3B, 3C, ...; 8A, 8B, 8C, ...) aufweist, welches jeweils mit konturangepaßten Temperiermittelkanälen (4A, 4B, 4C; 9A, 9B, 9E) versehen und kraftschlüssig mit dem Formkern (1) bzw. dem Formgesenk (6) verbunden ist.

2. Vorrichtung nach Anspruch 1,
**dadurch gekennzeichnet,** daß der Formkern (1) einen Kernrumpf (2) und einen aus wenigstens einem Segment (3A, 3B, 3C, ...) bestehenden Kernkopf (3) aufweist und daß jedes Segment (3A, 3B, 3C, ...) aus mehreren Temperiermittelkanäle (4A, 4B, 4C) enthaltenden und untereinander stoffschlüssig verbundenen Kernsegmentplatten (3A', 3A'', 3A'''; 3B', 3B''; 3C', 3C'', 3C''') hergestellt ist.

3. Vorrichtung nach Anspruch 1,
**dadurch gekennzeichnet,** daß das Formgesenk (6) einen Gesenkrumpf (7) und einen aus wenigstens einem Segment (8A, 8B, 8C, ....) bestehenden Gesenkkopf (8) aufweist und daß jedes Segment (8A, 8B, 8C, ...) aus mehreren Temperiermittelkanäle (9A, 9B, 9E) enthaltenden und untereinander stoffschlüssig verbundenen Gesenksegmentplatten (8A', 8A'', 8A'''; 8B', 8B'',; 8C', 8C'') hergestellt ist.

4. Vorrichtung nach einem der Ansprüche 1 bis 3,
**dadurch gekennzeichnet,** daß die kraftschlüssige Verbindung zwischen Kernrumpf (2) bzw. Gesenkrumpf (7) und den jeweiligen Segmenten (3A, 3B, 3C, ...; 8A, 8B, 8C, ...) mittels Befestigungselementen (5, 10) erfolgt.

5. Vorrichtung nach einem der Ansprüche 1 bis 2,
**dadurch gekennzeichnet,** daß die kraftschlüssige Verbindung zwischen Kernrumpf bzw. Gesenkrumpf und den jeweiligen Segmenten durch konstruktiven Formschluß erfolgt.

6. Vorrichtung nach einem der Ansprüche 1 bis 5,
**dadurch gekennzeichnet,** daß die einzelnen benachbarten Segmente untereinander durch Befestigungselemente form- oder kraftschlüssig miteinander verbunden sind.

7. Vorrichtung nach einem der Ansprüche 4 bis 5,
**dadurch gekennzeichnet,** daß die Befestigungselemente (5, 10) als Bolzen ausgebildet sind.

8. Vorrichtung nach einem der Ansprüche 4 bis 7,
**dadurch gekennzeichnet,** daß die Befestigungselemente als Schrauben ausgebildet sind.

9. Vorrichtung nach einem der Ansprüche 1 bis 8,
**dadurch gekennzeichnet,** daß einzelne Segmente (3A) wiederum in Untersegmente (3AA, 3AB, 3AC, 3AD) aufgeteilt sind.

10. Verfahren zum Herstellen einer Vorrichtung nach einem der Ansprüche 1 bis 9,
**gekennzeichnet durch** die folgenden Schritte:
- Auftrennen des Formkerns und/oder des Formgesenks in einen Rumpf und wenigstens ein Segment,
- Auftrennen jedes Segments in einzelne Segmentplatten,
- Herstellen von konturangepaßten Temperiermittelkanälen entsprechend dem gewünschten Verlauf in den jeweiligen Segmentplatten jedes Segments durch Fräsen, Erodieren od. dgl.,
- stoffschlüssiges Verbinden der einzelnen Segmentplatten zu den Segmenten und
- kraftschlüssiges Verbinden der Segmente mit dem Formkern bzw. Formgesenk.

11. Verfahren nach Anspruch 10,
**dadurch gekennzeichnet,** daß das stoffschlüssige Verbinden mittels Hart- bzw. Hochtemperaturlöten erfolgt.

12. Verfahren nach Anspruch 10,
**dadurch gekennzeichnet,** daß das stoffschlüssige Verbinden mittels Diffusionsschweißen erfolgt.

13. Verfahren nach einem der Ansprüche 10 bis 12,
**dadurch gekennzeichnet,** daß die einzelnen Segmente durch Befestigungselemente mit dem Formkern bzw. Formgesenk fixiert werden.

14. Verfahren nach einem der Ansprüche 10 bis 13,
**dadurch gekennzeichnet,** daß die einzelnen Segmente formschlüssig mit dem Formkern bzw. Formgesenk fixiert werden.

15. Verfahren nach einem der Ansprüche 10 bis 13,
**dadurch gekennzeichnet,** daß die einzelnen Segmente durch Befestigungselemente formschlüssig untereinander fixiert werden.
